# EUROPEAN PATENT SPECIFICATION

(11) **EP 3 146 200 B1**
(45) Date of publication and mention of the grant of the patent: **07.11.2018**
(21) Application number: 15730262.1
(22) Date of filing: 14.05.2015
(51) Int. Cl.: F03B 13/06, F03B 13/26

(54) **MULTIPURPOSE POWERPLANT COMPRISING TIDAL AND SOLAR ENERGY GENERATION**
MULTIFUNKTIONALES KRAFTWERK, UMFASSEND GEZEITEN- UND SOLARKRAFTWERKE
CENTRALE ÉLECTRIQUE MULTIFONCTIONNELLE COMPRENANT DES CONVERTISSEURS D'ÉNERGIE MARÉMOTRICE ET SOLAIRE

(30) Priority: 15.05.2014 IT BO20140289
(43) Date of publication of application: 29.03.2017
(73) Proprietor: Tor - H2 S.r.l., 40068 San Lazzaro di Savena (IT)
(72) Inventor: COLLIVA, Cesare, I-40068 San Lazzaro di Savena (Bologna) (IT)
(74) Representative: Milli, Simone
(86) International application number: PCT/IB2015/053558
(87) International publication number: WO 2015/173765

(56) References cited:
- WO-A1-2009/118572
- WO-A2-2012/073195
- GB-A- 2 507 362

## Description

### Technical field

This invention relates to a multi-pupose plant, in particular for generating electricity.

The invention relates in particular to a plant for converting the kinetic energy deriving from the movements of a water source due to the action of the tides, in such a way as to increase the potential head of the turbines for hydroelectric conversion.

### Background art

Prior art systems are currently known which use the effect of the activities of the tides, an effect which is linked in turn to various causes such as, for example, the reciprocal Earth-Moon motion, for generating electricity using turbines for hydroelectric conversion.

Moreover, the plants for the conversion of hydraulic kinetic energy into electricity operate continuously, with the consequence that there may easily be more or less extended periods of time during which at least a large part of the electricity produced by the hydroelectric turbines would be wasted, which leads to the desire to store it.

The most efficient storage process, which results in fewer losses, consists in returning the same fluid to a greater height, the head of which has been used for generating the energy to be stored. In this way, the gravitational potential energy head can be used again and, therefore, the kinetic energy deriving from that head.

A tidal power generation and pumped storage system using said process is disclosed in GB 2507362. That technique for the storage of unused energy may in any case result in losses, in particular related to the change of configuration of the plant which is necessary when the energy extracted from the single turbine is no longer directed towards the users, but towards means such as pumps which carry the fluid upwards.

### Disclosure of the invention

The aim of this invention is to provide a plant for generating electricity, in particular a plant for the conversion of hydraulic gravitational potential energy into another form of energy using the movements of a water source due to the action of the tides.

A further aim of this invention is to provide a plant for generating electricity, in particular a plant for the conversion of hydraulic gravitational potential energy into another form of energy using the movements of a water source due to the action of the tides, and which allows recovery of at least part of the hydraulic potential energy without having to changing the configuration of the components of the plant.

These aims are obtained by a plant for generating electricity according to claim 1.

A possible embodiment of the invention comprises at least one of the following aspects.

Preferably, the plant comprises a collecting tank in fluid-dynamic communication with the operating machine and in fluid-dynamic communication with the reservoir for re-introducing the water in the reservoir.

Preferably, the operating machine comprises a pump powered with solar power by means of the connection with the photovoltaic apparatus.

Preferably, the plant comprises at least one further reservoir and at least one hydroelectric turbine associated with the further reservoir and the hydroelectric turbine leads directly to the outside of the plant.

In accordance with another aspect, this invention relates to a method for using the plant which uses the energy produced by the tides which occur at two separate times of day generating two discharge cycles from the further tank to the respective hydroelectric turbine.

Preferably, the energy produced by the tides which occur at two separate times of day is used, generating a discharge cycle from the reservoir to the respective hydroelectric turbine, and increasing the gravitational potential energy of the water which comes out of the hydroelectric turbine associated with the reservoir, returning it towards the reservoir.

The features of this invention are described in detail below relating to a possible embodiment of the invention to be considered by way of a nonlimiting example of the more general concepts claimed.

### Brief description of drawings

The detailed description which follows relates to the accompanying drawings, in which:
- Figure 1 is a top view of a plant according to this invention;
- Figure 2 is a side view in cross section of a portion of a plant according to this invention;
- Figure 3 is a side view in cross section of a portion of a plant according to a different preferred embodiment of this invention.

### Detailed description of preferred embodiments of the invention

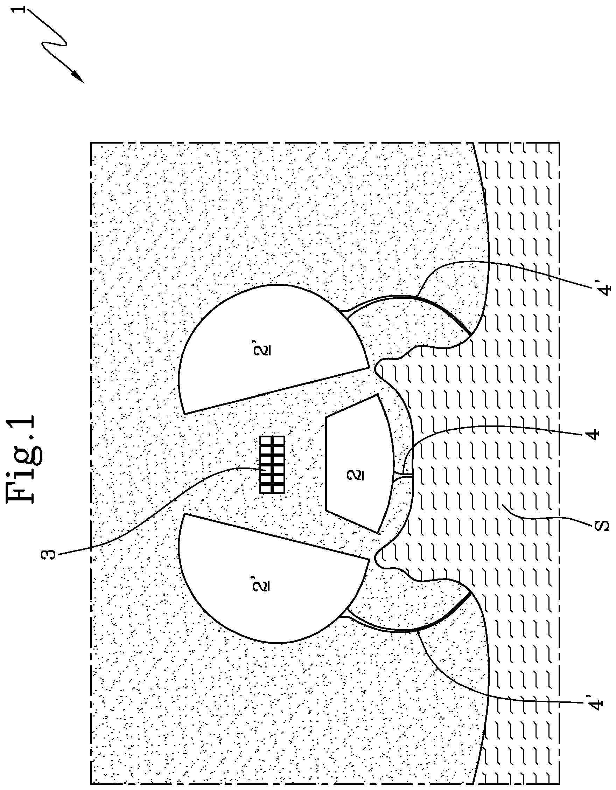

Figure 1 shows a top view of a plant according to the preferred embodiment of this invention. The plant 1 comprises at least one tank and in particular according to the embodiment illustrated in the drawings there is a tank 2 preferably positioned centrally, two further tanks 2' which are preferably alongside the tank 2 and a photovoltaic apparatus 3. Alternatively, there may be a tank 2 and a single further reservoir 2'.

The tank 2 is in communication with the water source S using a duct 4, and the two further tanks 2' are connected to the source S by respective ducts 4'.

The source S is preferably the sea, which is a water source subject to movements due to the action of the tides which can also be considerable in size.

All the tanks are in communication with hydroelectric turbines not shown in Figure 1, since they are below ground level. More specifically, each tank is in communication with at least one hydroelectric turbine.

Advantageously, only the hydroelectric turbine associated with one of the tanks, in particular the one associated with the central tank 2, is in fluid-dynamic communication with an operating machine which carries the water leaving the turbine upwards. The function of the operating machine is preferably that of storing the potential energy by using the photovoltaic apparatus 3 which is able to supply the operating machine.

In other words, the two further tanks 2' are in communication with respective hydroelectric turbines which discharge freely downstream of the turbine.

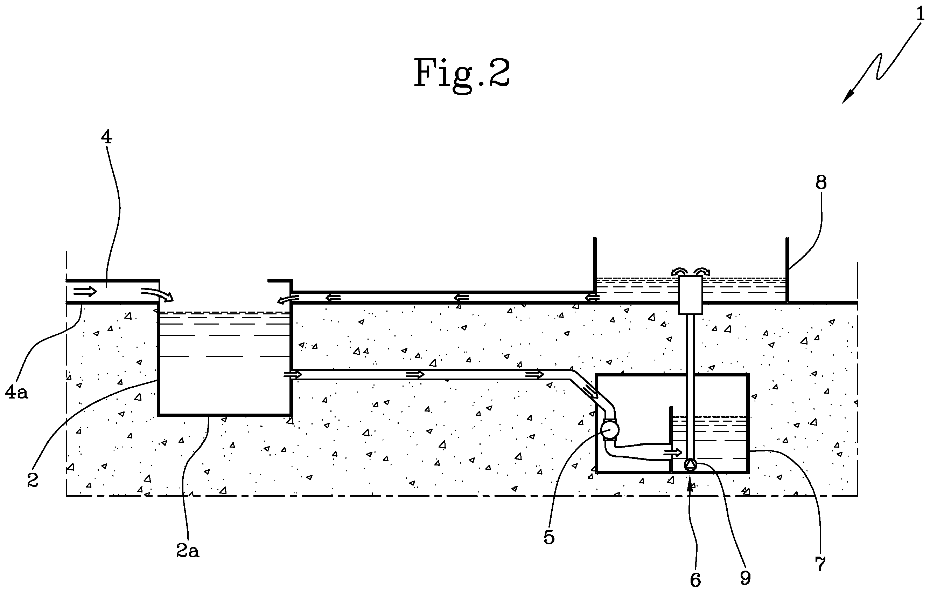

Figure 2 shows a side cross-section of the portion relative to the central tank 2 of the preferred embodiment of a plant for generating electricity according to this invention. The tank 2 configured to collect water from the water source and the hydroelectric turbine 5 associated with the tank 2 may be seen.

The reservoir 2 is fluid-dynamically connected to the water source in such a way as to be able to use the variations in gravitational potential energy due to the action of the tides, as described above. The tank 2 comprises a bottom surface 2a positioned advantageously at a height lower than at least the maximum daily height reached by the water following the action of the tides, and preferably at a height lower than the minimum height of the tide.

The hydroelectric turbine 5 is fluid-dynamically connected to the reservoir 2 in such a way as to be able to use a gravitational potential energy difference of the water collected by the reservoir 2, for being activated by the flow of water and for converting the kinetic energy of the water into electricity.

The tank 2 is connected to the water source by the duct 4 configured in such a way that at least part of the effect of the lifting and lowering movements of the tide is transmitted to the water in the tank 2, so as to use the increase in kinetic energy associated with the movement of the water downwards following the change in height of the water level in the source.

More specifically, to reach this aim, a bottom surface 4a of the duct 4 preferable lies at a height lower than at least the maximum daily height reached by the water following the action of the tides, and preferably at a height lower than the daily minimum height of the water in the source.

Preferably, downstream of the hydroelectric turbine 5 an operating machine 6 is present configured to increase the gravitational potential energy of the water outflowing from the hydroelectric turbine 5. The operating machine 6 lifts the water from a bottom tank 7 located downstream of the hydroelectric turbine 5.

In this way, the unused energy may be stored when the energy demand of the users reduces and/or when using the photovoltaic apparatus 3. Preferably, the plant comprises a collecting tank 8 in fluid communication with the operating machine 6 and in fluid-dynamic communication with the reservoir 2 for re-introducing the water in the reservoir 2.

In this way, the water of which the gravitational potential energy is to be stored may be collected in the collection tank 8.

Preferably, the operating machine 6 comprises a pump 9 powered with solar power by means of the connection with the photovoltaic apparatus and/or a hydraulic ram pump.

The photovoltaic apparatus 3, not shown in Figure 2, is connected to the operating machine 6, in particular to the pump 9, in such a way as to supply them with the energy in order to operate.

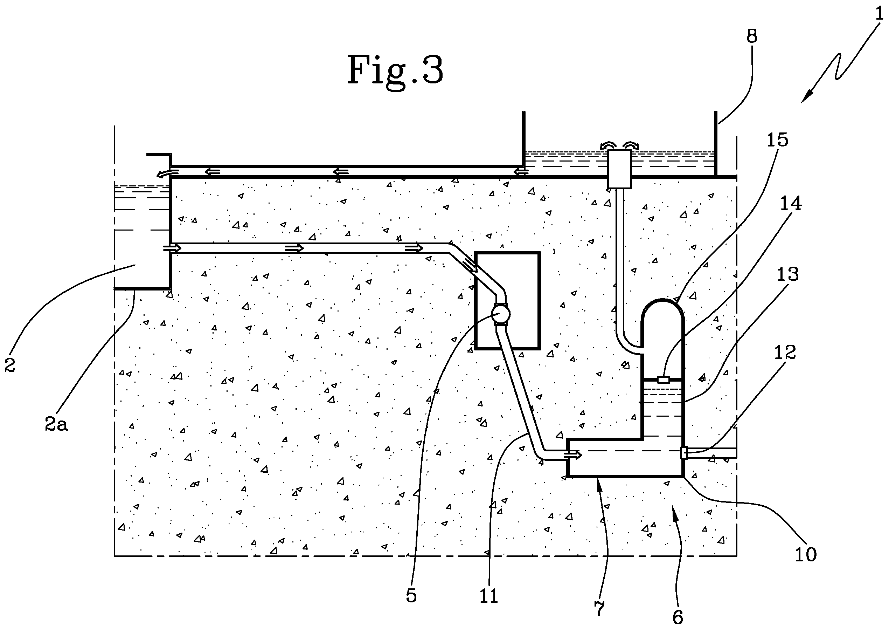

With reference to Figure 3, the function of operating machine 6 as performed by a hydraulic ram pump 10, comprising a delivery conduit 11 wherein the water acquires a quantity of movement energy, sufficient to automatically close a discharge valve 12 at the end of the conduit, causing the "water hammer." Before the discharge point, an offtake 13 allows the connection of the delivery line, using a check valve 14. The counterpressure activates the opening of this hydraulic device, rising a predetermined quantity of water. Its intervention also favours a reduction in the delivery pressure, re-activating the discharge valve, which, thanks to an elastic element, for example a spring, opens again, thereby allowing the flow and, therefore, restarting the cycle.

In order to supply a constant flow rate of water raised, there is an expansion vessel 15 positioned downstream of the check valve, with the purpose of levelling the flow rate.

The use of the hydraulic ram allows at least part of the solar energy to be saved, which may be used for other purposes.

This description of the tank 2 also applies to each further tank 2' with the difference that the operating machine 6, the bottom tank 7 and the collection tank 8 are not present in the case of the further tank 2'. In other words, the hydroelectric turbine associated with the further tank 2' leads directly to the outside of the plant.

In use, the plant 1 uses the energy produced by the tides which occur at two separate times of day generating two discharge cycles from each of the further tanks 2'.

In the case of tank 2, the energy produced by the tides which occur at two separate times of day is used, generating a single discharge cycle from the hydroelectric turbine 5. Before the discharge cycle, the gravitational potential energy of the water which comes out of the hydroelectric turbine 5 associated with the reservoir 2 is increased, returning it towards the reservoir 2. If the photovoltaic apparatus 3 is used to increase the gravitational potential energy of the outflowing water from the hydroelectric turbine 5, the operating machine 6 is driven during the daylight hours of the day.

According to another aspect, it should be noted that the plant also comprises a module for allowing the production of hydrogen (preferably using an electrolysis process).

This module, more specifically the electrolysis process, may be activated by electricity supplied by any one of the generating sources planned in the system (solar panels, hydroelectric turbine).

Advantageously, the module may be coupled (for receiving the water necessary for its operation) to any of the tanks or be interposed between them or comprise a direct connection to the water source.

According to yet another aspect, the system also comprises an apparatus for desalination, which be coupled (for receiving the water necessary for its operation) to any of the tanks or be interposed between them or comprise a direct connection to the water source.

This module provides fresh water and salt from the salt water introduced.

It should be noted that the module may be activated by electricity supplied by any one of the generating sources planned in the system (solar panels, hydroelectric turbine).

It should be noted that the module for the production of hydrogen may also be advantageously positioned downstream of the desalination module.

It should also be noted that the above-mentioned modules can be activated / deactivated depending on the actual availability of electricity and/or the local requirements of the population.

Advantageously, according to the above-mentioned aspects, the system allows electricity to be provided and products which can be obtained from the water, in particular from salt water.

In this way, a multipurpose plant is defined for producing electricity and products which can be obtained from the water, in particular from salt water, which may meet the primary needs of the population resident near the plant.

## Claims

1. A plant (1) for generating electricity comprising at least one reservoir (2, 2') configured to collect water from a water source (S) and at least one hydroelectric turbine (5) associated with said reservoir (2, 2'), wherein:
- said reservoir (2, 2') is fluid-dynamically connected to said water source (S), said reservoir (2, 2') comprising a bottom surface (3a) positioned at a height lower than at least the maximum daily height reached by the water of the water source (S) following the action of the tides;
- said hydroelectric turbine (5) is fluid-dynamically connected to said reservoir (2, 2') in such a way as to be able to use a gravitational potential energy difference of the water collected by said reservoir (2, 2'), for being activated by the flow of water and for converting the kinetic energy of the water into electricity;
- a photovoltaic apparatus (3) configured to convert a flow of solar radiant energy into another form of energy, wherein an operating machine (6) is present downstream of said hydroelectric turbine (5) associated with said reservoir (2), the operating machine (6) being configured to increase the gravitational potential energy of the water which came out of said hydroelectric turbine (5) associated with the reservoir (2);
**characterised in that** said operating machine (6) comprises a hydraulic ram pump.

2. The plant (1) according to claim 1, wherein said reservoir (2, 2') is connected to said water source (S) by a fluid-dynamic communication device (4, 4') configured to ensure that at least part of the up and down movement of the level of the water source due to the tides is transmitted to the water in said reservoir (2, 2').

3. The plant according to claim 1 or 2, wherein a bottom surface (4a) of the communication device (4, 4') is at a height lower than at least the maximum daily height reached by the water of the water source following the action of the tides, and preferably at a height also lower than the minimum height reached by said water.

4. The plant (1) according to one or more of the preceding claims, wherein said communication device (4, 4') comprises an uncovered duct.

5. The plant (1) according to any of the previous claims, wherein said plant (1) comprises a collecting tank (8) in fluid-dynamic communication with said operating machine (6) and in fluid-dynamic communication with said reservoir for re-introducing the water in said reservoir (2).

6. The plant (1) according to any of the previous claims, wherein said operating machine (6) comprises a pump powered with solar power by means of the connection with said photovoltaic apparatus (3).

7. The plant (1) according to any of the previous claims, comprising at least one further reservoir (2') and at least one hydroelectric turbine associated with said further reservoir (2') wherein said hydroelectric turbine leads directly to the outside of the plant.

8. The plant (1) according to one or more of the preceding claims, further comprising a module for the production of hydrogen, configured to make hydrogen available by means of electrolysis.

9. The plant (1) according to one or more of the preceding claims, further comprising a desalination module, configured to separate the salt water into fresh water and salt.

10. A method for using a plant (1) according to claim 7, wherein said method comprises a step of using the energy produced by the tides which occur at two separate times of day generating two discharge cycles from said further reservoir (2') to the respective hydroelectric turbine.

11. The method for use according to claim 10, comprising using the energy produced by the tides which occur at two separate times of day generating a discharge cycle from said reservoir (2) to the respective hydroelectric turbine (5), and increasing the gravitational potential energy of the water which comes out of said hydroelectric turbine (5) associated with said reservoir (2), returning it towards the reservoir (2).

## Patentansprüche

1. Anlage (1) zur Erzeugung von Strom, umfassend mindestens einen Speicher (2, 2'), der ausgelegt ist, um Wasser aus einer Wasserquelle (S) zu sammeln und mindestens eine Wasserturbine (5), die mit dem Speicher (2, 2') assoziiert ist, wobei
- der Speicher (2, 2') fluiddynamisch mit der Wasserquelle (S) verbunden ist, wobei der Speicher (2, 2') eine Bodenoberfläche (3a) umfasst, die auf einer Höhe positioniert ist, die niedriger als der vom Wasser der Wasserquelle (S) gemäß der Wirkung der Gezeiten täglich erreichte Höchststand ist,
- wobei die Wasserturbine (5) fluiddynamisch mit dem Speicher (2, 2') verbunden ist, sodass eine schwerkraftbedingte potenzielle Energiedifferenz des vom Speicher (2, 2') gesammelten Wassers genutzt werden kann, um durch den Wasserstrom aktiviert zu werden und die kinetische Energie des Wassers in Strom umzuwandeln;
- eine Photovoltaikvorrichtung (3), die ausgelegt ist, um einen Solarenergiestrom in eine andere Form von Energie umzuwandeln, wobei eine Betriebsmaschine (6) stromabwärts der Wasserturbine (5) bereitgestellt ist, assoziiert mit dem Speicher (2), wobei die Betriebsmaschine (6) ausgelegt ist, um die schwerkraftbedingte potenzielle Energie des Wassers, das aus der mit dem Speicher (2) assoziierten Wasserturbine (5) strömt, zu erhöhen, **dadurch gekennzeichnet, dass** die Betriebsmaschine (6) einen hydraulischen Widder umfasst.

2. Anlage (1) nach Anspruch 1, wobei der Speicher (2, 2') mit der Wasserquelle (S) durch eine fluiddynamische Kommunikationsvorrichtung (4, 4') verbunden ist, ausgelegt, um zu gewährleisten, dass mindestens ein Teil der Aufwärts- und Abwärtsbewegung des Stands der Wasserquelle aufgrund der Gezeiten auf das Wasser im Speicher (2, 2') übertragen wird.

3. Anlage nach Anspruch 1 oder 2, wobei sich eine Bodenoberfläche (4a) der Kommunikationsvorrichtung (4, 4') auf einer Höhe befindet, die niedriger ist als mindestens der vom Wasser der Wasserquelle infolge der Wirkung der Gezeiten täglich erreichte Höchststand, und vorzugsweise auf einer Höhe, die auch niedriger als der von diesem Wasser erreichte Mindeststand ist.

4. Anlage (1) nach einem oder mehreren der vorhergehenden Ansprüche, wobei die Kommunikationsvorrichtung (4, 4') eine unbedeckte Leitung umfasst.

5. Anlage (1) nach einem der vorhergehenden Ansprüche, wobei die Anlage (1) einen Sammelbehälter (8) in fluiddynamischer Kommunikation mit der Betriebsmaschine (6) und in fluiddynamischer Kommunikation mit dem Speicher umfasst, um das Wasser wieder in den Speicher (2) zurückzuleiten.

6. Anlage (1) nach einem der vorhergehenden Ansprüche, wobei die Betriebsmaschine (6) eine mittels der Verbindung mit der Photovoltaikvorrichtung (3) mit Solarstrom versorgte Pumpe umfasst.

7. Anlage (1) nach einem der vorhergehenden Ansprüche, umfassend mindestens einen weiteren Speicher (2') und mindestens eine Wasserturbine, die mit diesem weiteren Speicher (2') verbunden ist, wobei die Wasserturbine direkt zur Außenseite der Anlage führt.

8. Anlage (1) nach einem oder mehreren der vorhergehenden Ansprüche, zudem umfassend ein Modul zur Wasserstofferzeugung, ausgelegt, um Wasserstoff mittels Elektrolyse bereitzustellen.

9. Anlage (1) nach einem oder mehreren der vorhergehenden Ansprüche, zudem umfassend ein Entsalzungsmodul, das ausgelegt ist, um Salzwasser in Frischwasser und Salz zu trennen.

10. Verfahren zur Nutzung einer Anlage (1) nach Anspruch 7, wobei das Verfahren einen Schritt zum Nutzen der von den Gezeiten, die an zwei verschiedenen Zeitpunkten des Tages auftreten, erzeugten Energie zu nutzen, indem zwei Ablasszyklen vom weiteren Speicher (2') an die jeweilige Wasserturbine generiert werden.

11. Verfahren zur Nutzung gemäß Anspruch 10, umfassend die Nutzung der von den Gezeiten, die an zwei verschiedenen Zeitpunkten eines Tages auftreten, erzeugten Energie, indem ein Ablasszyklus vom Speicher (2) an die jeweilige Wasserturbine (5) generiert wird und die schwerkraftbedingte potenzielle Energie des Wassers, das aus der Wasserturbine (5), die mit dem Speicher (2) assoziiert ist, strömt, erhöht und wieder zum Speicher (2) zurückgeleitet wird.

## Revendications

1. Installation (1) pour la génération d'électricité comprenant au moins un réservoir (2, 2') configuré pour collecter de l'eau à partir d'une source d'eau (S) et au moins une turbine hydroélectrique (5) associée audit réservoir (2, 2'), dans laquelle :
- ledit réservoir (2, 2') est raccordé de façon hydrodynamique à ladite source d'eau (S), ledit réservoir (2, 2') comprenant une surface de fond (3a) positionnée à une hauteur inférieure au moins à la hauteur journalière maximale atteinte par l'eau de la source d'eau (S) selon l'action des marées ;
- ladite turbine hydroélectrique (5) est raccordée de façon hydrodynamique audit réservoir (2, 2') de sorte à pouvoir utiliser une variation d'énergie potentielle gravitationnelle de l'eau collectée par ledit réservoir (2, 2'), pour être activée par le débit d'eau et pour convertir l'énergie cinétique de l'eau en électricité ;
- un appareil photovoltaïque (3) configuré pour convertir un flux d'énergie de rayonnement solaire en une autre forme d'énergie, dans laquelle une machine opérationnelle (6) se situe en aval de ladite turbine hydroélectrique (5) associée audit réservoir (2), la machine opérationnelle (6) étant configurée pour augmenter l'énergie potentielle gravitationnelle de l'eau provenant de ladite turbine hydroélectrique (5) associée au réservoir (2) ; **caractérisée en ce que** ladite machine opérationnelle (6) comprend une pompe à bélier hydraulique.

2. Installation (1) selon la revendication 1, dans laquelle ledit réservoir (2, 2') est raccordé à ladite source d'eau (S) par un dispositif de communication hydrodynamique (4, 4') configuré pour garantir qu'au moins une partie du mouvement montant et descendant du niveau de la source d'eau provoqué par les marées est transmise à l'eau dans ledit réservoir (2, 2').

3. Installation selon la revendication 1 ou 2, dans laquelle une surface de fond (4a) du dispositif de communication (4, 4') se situe à une hauteur inférieure au moins à la hauteur journalière maximale atteinte par l'eau de la source d'eau selon l'action des marées, et de préférence, à une hauteur aussi inférieure à la hauteur minimale atteinte par ladite eau.

4. Installation (1) selon une ou plusieurs des revendications précédentes, dans laquelle ledit dispositif de communication (4, 4') comprend un conduit découvert.

5. Installation (1) selon l'une quelconque des revendications précédentes, dans laquelle ladite installation (1) comprend une citerne de collecte (8) en communication hydrodynamique avec ladite machine opérationnelle (6) et en communication hydrodynamique avec ledit réservoir pour réintroduire l'eau dans ledit réservoir (2).

6. Installation (1) selon l'une quelconque des revendications précédentes, dans laquelle ladite machine opérationnelle (6) comprend une pompe alimentée par l'énergie solaire au moyen de la connexion audit appareil photovoltaïque (3).

7. Installation (1) selon l'une quelconque des revendications précédentes, comprenant au moins un réservoir (2') supplémentaire et au moins une turbine hydroélectrique associée audit réservoir (2') supplémentaire, dans laquelle ladite turbine hydroélectrique mène directement à l'extérieur de l'installation.

8. Installation (1) selon une ou plusieurs des revendications précédentes, comprenant également un module pour la production d'hydrogène, configuré pour rendre l'hydrogène disponible par électrolyse.

9. Installation (1) selon une ou plusieurs des revendications précédentes, comprenant également un module de dessalement, configuré pour séparer l'eau salée en eau fraîche et en sel.

10. Procédé d'exploitation d'une installation (1) selon la revendication 7, dans lequel ledit procédé comprend une étape d'utilisation de l'énergie produite par les marées se produisant en deux temps distincts de la journée, générant deux cycles de décharge dudit réservoir (2') supplémentaire à la turbine hydroélectrique respective.

11. Procédé d'exploitation selon la revendication 10, comprenant l'utilisation de l'énergie produite par les marées se produisant en deux temps distincts de la journée, générant un cycle de décharge dudit réservoir (2) à la turbine hydroélectrique respective (5), et l'augmentation de l'énergie potentielle gravitationnelle de l'eau sortant de ladite turbine hydroélectrique (5) associée audit réservoir (2) en la ramenant vers le réservoir (2).
